# EUROPEAN PATENT APPLICATION

(11) **EP 4 043 414 A1**
(43) Date of publication of application: **17.08.2022**
(21) Application number: 20874813.7
(22) Date of filing: 05.10.2020
(51) Int. Cl.: C03C 3/091, C03C 3/118, C03C 17/04, F24C 15/10, H05B 6/12

(54) **COOKER TOP PLATE**

(30) Priority: 08.10.2019 JP 2019184989
(71) Applicant: Nippon Electric Glass Co., Ltd., Otsu-shi, Shiga 520-8639 (JP)
(72) Inventor: MATSUBARA, Tsukasa, Otsu-shi, Shiga 520-8639 (JP)
(74) Representative: Tetzner, Michael
(86) International application number: PCT/JP2020/037710
(87) International publication number: WO 2021/070774

(57) **Abstract**

Provided is a cooker top plate that has excellent mechanical strength and is less likely to break and stain. A cooker top plate 1 includes: a glass substrate 2 having a cooking surface 2a on which a cooking utensil is to be put and an underside surface 2b opposite to the cooking surface 2a; and an inorganic layer 3 provided on the underside surface 2b of the glass substrate 2 and containing a glass, wherein the inorganic layer 3 has a tensile stress of 3.7 MPa or less, and a content of the glass in the inorganic layer 3 is not less than 60% by volume and not more than 80% by volume.

## Description

### [Technical Field]

The present invention relates to cooker top plates.

### [Background Art]

A thermally resistant glass substrate made of crystallized glass, borosilicate glass or the like having a low coefficient of thermal expansion is used as a top plate for a cooker, such as an electromagnetic cooker, a radiant heater cooker or a gas cooker. The glass substrate of such a cooker top plate has a cooking surface and an underside surface located on the side thereof closer to the interior of the cooker.

Generally, the underside surface of a glass substrate in a cooker top plate has a decorative coating or a light-shielding layer formed for the purpose of increasing the aesthetic appearance or hiding the internal structure of the cooker. Such a decorative coating and a light-shielding layer are known to be formed by applying a paste containing a glass powder and an inorganic pigment powder onto the glass substrate and firing the paste (see, for example, Patent Literatures 1 and 2).

### [Citation List]

### [Patent Literature]

[PTL 1]
   JP-A-2011-192535
[PTL 2]
   JP-B2-5621121

### [Summary of Invention]

### [Technical Problem]

However, a cooker top plate formed by providing a decorative coating or a light-shielding layer on a glass substrate is likely to have insufficient mechanical strength and therefore has a problem of ease of breakage. In addition, it also has a problem that an adhesive or the like for use in producing a cooker forms stains.

An object of the present invention is to provide a cooker top plate that has excellent mechanical strength and is less likely to break and stain.

### [Solution to Problem]

A cooker top plate according to the present invention includes: a glass substrate having a cooking surface on which a cooking utensil is to be put and an underside surface opposite to the cooking surface; and an inorganic layer provided on the underside surface of the glass substrate and containing a glass, wherein the inorganic layer has a tensile stress of 3.7 MPa or less and a content of the glass in the inorganic layer is not less than 60% by volume and not more than 80% by volume.

In the present invention, the inorganic layer preferably has a tensile stress of not less than 2.2 MPa.

In the present invention, the inorganic layer preferably further contains an inorganic pigment.

In the present invention, a content of the inorganic pigment in the inorganic layer is preferably not less than 20% by volume and not more than 40% by volume.

In the present invention, an average coefficient of thermal expansion of the glass in a range of 30°C to 380°C both inclusive is preferably not less than 45 × 10⁻⁷/°C and not more than 55 × 10⁻⁷/°C.

In the present invention, a temperature at which the glass has a viscosity of 10^{5.1} mPa·s is preferably not lower than 800°C and not higher than 900°C.

In the present invention, the glass is preferably borosilicate glass.

In the present invention, the glass preferably has a composition of, in terms of percentage by mass, 55 to 70% Sio₂, 15 to 25% B₂O₃, 3 to 10% Al₂O₃, 0.1 to 4.9% BaO, 0 to 3% CaO, 0 to 3% MgO, 0.1 to 5% Li₂O, 0 to 10% Na₂O, 0.3 to 15% K₂O, and 0 to 2%F.

In the present invention, the inorganic layer preferably has a thickness of not less than 2.0 µm and not more than 2.8 µm.

### [Advantageous Effects of Invention]

The present invention enables provision of a cooker top plate that has excellent mechanical strength and is less likely to break and stain.

### [Brief Description of Drawings]

[Fig. 1]Fig. 1 is a schematic cross-sectional view showing a cooker top plate according to a first embodiment of the present invention.
[Fig. 2]Fig. 2 is a schematic cross-sectional view showing a structure in which a temperature sensor is attached to the underside surface of the cooker top plate according to the first embodiment of the present invention.
[Fig. 3]Fig. 3 is a schematic cross-sectional view showing a cooker top plate according to a second embodiment of the present invention.

### [Description of Embodiments]

Hereinafter, a description will be given of preferred embodiments. However, the following embodiments are merely illustrative and the present invention is not limited to the following embodiments. Throughout the drawings, members having substantially the same functions may be referred to by the same reference characters.

Fig. 1 is a schematic cross-sectional view showing a cooker top plate according to a first embodiment of the present invention. As shown in Fig. 1, a cooker top plate 1 (hereinafter, the "cooker top plate 1" is referred to simply as the "top plate 1") includes a glass substrate 2. The glass substrate 2 has a cooking surface 2a and an underside surface 2b opposed to each other. The cooking surface 2a is a surface located on the side of the substrate where a cooking utensil, such as a pot or a frying pan, is to be put. The underside surface 2b is a surface located on the side of the substrate close to the interior of the cooker and facing a light source and a heater. Therefore, the cooking surface 2a and the underside surface 2b are top and under sides of the same substrate.

The glass substrate 2 transmits at least part of light within a wavelength range of 450 nm to 700 nm. The glass substrate 2 may be clear and colored, but is preferably clear and colorless from the viewpoint of further improving the aesthetic appearance of the top plate 1. Note that "clear" herein means that the light transmittance within a visible wavelength range of 450 nm to 700 nm is 70% or more.

The top plate 1 repeatedly undergoes heating and cooling. Therefore, the glass substrate 2 preferably has high thermal resistance and a low coefficient of thermal expansion. Specifically, the softening temperature of the glass substrate 2 is preferably 700°C or higher and more preferably 750°C or higher. Furthermore, the average coefficient of linear thermal expansion of the glass substrate 2 at 30°C to 750°C is preferably in a range of -10 × 10⁻⁷/°C to +60 × 10⁻⁷/°C, more preferably in a range of -10 × 10⁻⁷/°C to +50 × 10⁻⁷/°C, and still more preferably in a range of -10 × 10⁻⁷/°C to +40 × 10⁻⁷/°C. Therefore, the glass substrate 2 is preferably made of a glass having a high glass transition temperature and low expansibility or made of a low-expansion crystallized glass. A specific example of the low-expansion crystallized glass is "N-0" manufactured by Nippon Electric Glass Co., Ltd. Note that borosilicate glass or the like may be used as the glass substrate 2.

The thickness of the glass substrate 2 is not particularly limited. The thickness of the glass substrate 2 can be appropriately selected according to, for example, the light transmittance. The thickness of the glass substrate 2 may be, for example, about 2 mm to about 6 mm.

An inorganic layer 3 is provided on the underside surface 2b of the glass substrate 2. The inorganic layer 3 is a light-shielding layer provided for the purpose of hiding the internal structure of the cooker. In this embodiment, the inorganic layer 3 contains a glass and an inorganic pigment.

In this embodiment, the tensile stress of the inorganic layer 3 provided on the underside surface 2b of the glass substrate 2 is 3.7 MPa or less. Thus, the mechanical strength of the top plate 1 can be increased, which makes the top plate 1 difficult to break.

The tensile stress of the inorganic layer 3 can be obtained by determining the stress acting on the interface between the glass substrate 2 and the inorganic layer 3. Specifically, the top plate 1 in which the inorganic layer 3 is provided on the underside surface 2b of the glass substrate 2 is cut and the cut surface is examined in the cross-sectional direction. Then, the compressive stress acting on the glass substrate 2 side of the interface is measured with a strain gauge in accordance with the Senarmont method and the tensile stress can be obtained by calculation from the compressive stress acting on the glass substrate 2 side.

The tensile stress of the inorganic layer 3 is preferably not more than 3.5 MPa and more preferably not more than 3.1 MPa. In this case, the mechanical strength of the top plate 1 can be further increased, which makes the top plate 1 more difficult to break.

Furthermore, the tensile stress of the inorganic layer 3 is preferably not less than 2.2 MPa and more preferably not less than 2.6 MPa. As will be described hereinafter, the tensile stress of the inorganic layer 3 can be set within the above range by adjusting the content of the glass, the characteristics of the glass, the thickness of the inorganic layer 3, the characteristics of the glass substrate 2, and so on. In this regard, a further detailed description will be given below with reference to Fig. 2.

As shown in Fig. 2, a temperature sensor 4 (a thermocouple) for acquiring temperature data may be attached to the heating portion of the underside surface 2b of the top plate 1, using an adhesive 5, such as a silicone adhesive. Such an adhesive 5 may be evaporated by heat application at high temperatures with a heat source or the like. In a conventional top plate, the evaporant of the adhesive may seep, for example, through the light-shielding layer or the decorative coating to the glass substrate. Thus, when viewed from the cooking surface 2a side, the evaporant is easily noticeable as stains, so that the top plate may lose aesthetics.

The tensile stress of the inorganic layer 3 can be lowered by reducing the content of the glass in the inorganic layer 3 or decreasing the fluidity of the glass. However, if the content of the glass in the inorganic layer 3 is excessively reduced or the fluidity of the glass is excessively decreased, the inorganic layer 3 tends not to form a dense layer. In other words, it is necessary to increase the tensile stress to a certain extent by increasing the content of the glass in the inorganic layer 3 or increasing the fluidity of the glass. Therefore, by increasing the tensile stress of the inorganic layer 3 to a certain extent, the inorganic layer 3 can be formed into a denser layer to make it more difficult for the evaporant of the adhesive 5 to pass through the inorganic layer 3. Thus, it can be more difficult for stains due to the adhesive 5 or the like to be formed and, thus, the aesthetic appearance of the top plate 1 can be further improved.

The content of the glass in the inorganic layer 3 is not less than 60% by volume, preferably not less than 62% by volume, not more than 80% by volume, preferably not more than 75% by volume, more preferably not more than 72% by volume. When the content of the glass is equal to or greater than the above lower limit, the inorganic layer 3 can be formed into a denser layer to make it more difficult for stains due to the adhesive 5 or the like to be formed. Thus, the appearance quality of the top plate 1 can be further increased. Furthermore, when the content of the glass is equal to or smaller than the above upper limit, the adhesion area between the inorganic layer 3 and the glass substrate 2 can be further reduced, so that the stress at the interface between the glass substrate 2 and the inorganic layer 3 can be further reduced. Thus, the top plate 1 can be more difficult to break.

The average coefficient of thermal expansion of the glass contained in the inorganic layer 3 in a range of 30°C to 380°C both inclusive is preferably not less than 45 × 10⁻⁷/°C, more preferably not less than 48 × 10⁻⁷/°C, preferably not more than 55 × 10⁻⁷/°C, and more preferably not more than 51 × 10⁻⁷/°C. When the average coefficient of thermal expansion of the glass is equal to or greater than the above lower limit, the temperature for fixing the inorganic layer 3 can be further decreased, so that the glass substrate 2 can be even less likely to be adversely affected. In addition, the glass can be made more flowable, so that the inorganic layer 3 can be formed into a denser layer. Thus, it can be more difficult for stains due to the adhesive 5 or the like to be formed and, thus, the aesthetic appearance of the top plate 1 can be further improved. Furthermore, when the average coefficient of thermal expansion of the glass is equal to or smaller than the above upper limit, the difference in coefficient of expansion between the inorganic layer 3 and the glass substrate 2 can be further reduced, so that the stress at the interface between the glass substrate 2 and the inorganic layer 3 can be further reduced, which makes the top plate 1 more difficult to break.

The temperature at which the glass contained in the inorganic layer 3 has a viscosity of 10^{5.1} mPa·s is preferably not lower than 800°C, more preferably not lower than 820°C, preferably not higher than 900°C, and more preferably not higher than 880°C. When the temperature at which the glass has a viscosity of 10^{5.1} mPa·s is equal to or higher than the above lower limit, it can be more difficult to soften the glass and make it flowable, so that the adhesion strength of the inorganic layer 3 to the glass substrate 2 can be further reduced. Thus, the stress acting on the interface between the glass substrate 2 and the inorganic layer 3 can be further reduced, which makes the top plate 1 more difficult to break. Furthermore, when the temperature at which the glass has a viscosity of 10^{5.1} mPa·s is equal to or lower than the above higher limit, it can be easier to soften the glass and make it flowable, so that the inorganic layer 3 can be formed into a denser layer. Thus, it can be more difficult for stains due to the adhesive 5 or the like to be formed and, thus, the aesthetic appearance of the top plate 1 can be further improved.

The type of glass contained in the inorganic layer 3 is not particularly limited, but borosilicate glass is preferred. In this case, the difference in coefficient of expansion between the inorganic layer 3 and the glass substrate 2 can be further reduced, so that the stress at the interface between the glass substrate 2 and the inorganic layer 3 can be further reduced, which makes the top plate 1 more difficult to break.

Among others, the glass contained in the inorganic layer 3 is preferably a glass containing, in terms of % by mass, 55 to 70% Sio₂, 15 to 25% B₂O₃, 3 to 10% Al₂O₃, 0.1 to 4.9% BaO, 0 to 3% CaO, 0 to 3% MgO, 0.1 to 5% Li₂O, 0 to 10% Na₂O, 0.3 to 15% K₂O, and 0 to 2% F. Furthermore, the glass is preferably substantially free of lead. Note that "substantially free of lead" means that the content of lead in the glass is 0.01% by mass or less.

SiO₂ is a component that forms the glass network. The content of SiO₂ is, in terms of % by mass, preferably 55 to 70%, more preferably 55 to 65%, and still more preferably 60 to 65%. If the content of SiO₂ is too small, the acid resistance of the glass tends to deteriorate and the coefficient of thermal expansion of the glass tends to increase. For example, the difference in coefficient of expansion between the glass substrate 2 and the inorganic layer 3 may become excessively large, so that the top plate 1 may become easily breakable. On the other hand, if the content of SiO₂ is too large, the softening point and the melting point of the glass tend to be high, so that firing at low temperatures may become difficult.

B₂O₃ is a component that decreases the viscosity of the glass without excessively increasing the coefficient of thermal expansion. The content of B₂O₃ is preferably 15 to 25% by mass. If the content of B₂O₃ is too small, the viscosity of the glass tends to become excessively high. On the other hand, if the content of B₂O₃ is too large, the acid resistance of the glass tends to deteriorate.

Al₂O₃ is a component for increasing the chemical durability and reducing the possibility of devitrification of the glass. The content of Al₂O₃ is, in terms of % by mass, preferably 3 to 10% and more preferably 3 to 7%. If the content of Al₂O₃ is too small, the effect of reducing the possibility of devitrification of the glass tends to be poor. On the other hand, if the content of Al₂O₃ is too large, the viscosity of the glass tends to be excessively high.

BaO is a component that improves the chemical durability of the glass and a component that decreases the softening point. The content of BaO is, in terms of % by mass, preferably 0.1 to 4.9%, more preferably 0.5 to 4.9%, and still more preferably 1 to 4.9%. If the content of BaO is too small, the effect of improving the chemical durability of the glass and the effect of decreasing the softening point tend to be poor. On the other hand, if the content of BaO is too large, the coefficient of thermal expansion of the glass tends to become excessively high.

The glass does not necessarily need to contain MgO and CaO, but may contain them, each up to a maximum of 3% by mass, because they have the effect of decreasing the softening point of the glass.

Alkali components Li₂O, Na₂O, and K₂O are components that can significantly decrease the softening point of the glass.

Particularly, Li₂O is a component having the effect of significantly decreasing the softening point of the glass even when added in a small amount. The content of Li₂O is, in terms of % by mass, preferably 0.1 to 5%, more preferably 0.1 to 3%, and still more preferably 0.1 to 2%. If the content of Li₂O is too small, the effect of decreasing the softening point of the glass tends to be poor. On the other hand, if the content of Li₂O is too large, the glass tends to become likely to devitrify, so that inconveniences due to a devitrified matter, such as an increase in coefficient of thermal expansion or a decrease in chemical durability, tend to be likely to occur.

K₂O is a component for reducing the possibility of devitrification of the glass. Particularly, when K₂O is contained in borosilicate glass containing Li₂O, the possibility of devitrification of the glass can be reduced, so that a highly thermally stable glass can be obtained. The content of K₂O is, in terms of % by mass, preferably 0.3 to 15%, more preferably 0.3 to 9%, and still more preferably 0.3 to 6%. If the content of K₂O is too small, the effect of reducing the possibility of devitrification of the glass tends to be poor. On the other hand, if the content of K₂O is too large, the acid resistance of the glass tends to significantly decrease and the coefficient of thermal expansion of the glass tends to become excessively high.

The mass fraction K₂O/Li₂O is preferably 0.3 or more, more preferably 0.5 or more, still more preferably 0.7 or more, yet still more preferably 0.9 or more, particularly preferably 1.5 or more and most preferably 2.0 or more. If K₂O/Li₂O is too small, the possibility of devitrification of the glass becomes significant, so that, for example, the glass contained in the inorganic layer 3 may devitrify during firing of the glass contained in the inorganic layer 3 or during use of the cooker top plate 1 or the like, so that inconveniences due to a devitrification phase, such as the occurrence of cracks or deterioration in acid resistance, tend to be likely to occur.

The content of Na₂O is, in terms of % by mass, preferably 0 to 10% and more preferably 0 to 8%. If the content of Na₂O is too large, the acid resistance of the glass tends to significantly decrease and the coefficient of thermal expansion of the glass tends to be likely to be high.

The content of F is, in terms of % by mass, preferably 0 to 2% and more preferably 0 to 1.5%. If the content of F is too large, the fluidity of the glass contained in the inorganic layer 3 becomes unstable, so that a stable inorganic layer 3 tends to become difficult to obtain.

Aside from the above components, SrO, ZrO₂, SnO, P₂O₅ or other components may be contained up to 5% by mass in the glass for the purpose of adjusting the softening point, improving the acid resistance or other purposes. Because ZrO₂ has a large effect of increasing the softening point of the glass, its additive amount is preferably less than 3% by mass.

The type of inorganic pigment contained in the inorganic layer 3 is not particularly limited and, for example, a Cu-Cr-Mn-based black inorganic pigment can be used. Aside from this, an inorganic pigment of the same type as an inorganic pigment contained in a silicone resin 6 to be described hereinafter can be used. Examples of the inorganic pigment include: white inorganic pigment powders, such as TiO₂ powder, ZrO₂ powder, and ZrSiO₄ powder; blue or green inorganic pigment powders containing Co; green inorganic pigment powders containing Co; Ti-Sb-Cr-based or Ti-Ni-based yellow inorganic pigment powders, Co-Si-based red inorganic pigment powders; brown inorganic pigment powders containing Fe; and black inorganic pigment powders containing Cu.

The content of inorganic pigment in the inorganic layer 3 is not particularly limited, but it is preferably not less than 20% by volume, more preferably not less than 28% by volume, preferably not more than 40% by volume, and more preferably not more than 37% by volume. When the content of the inorganic pigment is equal to or greater than the above lower limit, the adhesion area between the inorganic layer 3 and the glass substrate 2 can be further reduced, so that the stress at the interface between the glass substrate 2 and the inorganic layer 3 can be further reduced. Thus, the top plate 1 can be more difficult to break. Furthermore, when the content of the inorganic pigment is equal to or smaller than the above upper limit, the inorganic layer 3 can be formed into a denser layer to make it more difficult for stains due to the adhesive or the like to be formed.

The thickness of the inorganic layer 3 is not particularly limited, but it is preferably not less than 1.5 µm, more preferably not less than 2.0 µm, still more preferably not less than 2.1 µm, preferably not more than 2.8 µm, and more preferably not more than 2.7 µm. When the thickness of the inorganic layer 3 is equal to or greater than the above lower limit, the internal structure of the cooker can be more effectively hidden. In addition, it can be more difficult for stains due to the adhesive 5 or the like to be formed and, thus, the aesthetic appearance of the top plate 1 can be further improved. On the other hand, when the thickness of the inorganic layer 3 is equal to or smaller than the above upper limit, the stress at the interface between the glass substrate 2 and the inorganic layer 3 can be further reduced, which makes the top plate 1 more difficult to break.

The method for forming the inorganic layer 3 is not particularly limited. The inorganic layer 3 can be formed, for example, by the following method.

First, a solvent is added to a powder mixture of a glass powder and an inorganic pigment to turn the powder mixture into paste. The obtained paste is applied onto the underside surface 2b of the glass substrate 2 using screen printing or other methods and then dried. Thereafter, the paste is fired, so that the inorganic layer 3 can be formed. The firing temperature and the firing time can be appropriately selected according to the compositions of the glass powder and so on to be used or other conditions. The firing temperature may be, for example, about 800°C to about 900°C. The firing time may be, for example, about ten minutes to about an hour.

### (Second Embodiment)

Fig. 3 is a schematic cross-sectional view showing a cooker top plate according to a second embodiment of the present invention. As shown in Fig. 3, in a top plate 21, a heat-resistant resin layer 6 is further provided on the inorganic layer 3. The heat-resistant resin layer 6 contains a silicone resin and an inorganic pigment. By providing the heat-resistant resin layer 6, the thermal resistance of the top plate 21 can be further increased and the internal structure of the cooker can be more effectively hidden.

The type of silicone resin is not particularly limited, but a silicone resin having high thermal resistance is preferred. For example, the silicone resin is preferably a silicone resin in which an organic group bound directly to a silicon atom is at least one of a methyl group and a phenyl group. In this case, discoloration of the heat-resistant resin layer 6 when the top plate 21 reaches high temperatures can be more effectively reduced. Particularly, a silicone resin in which an organic group bound directly to a silicon atom is a methyl group is more preferred.

The content of the silicone resin in the heat-resistant resin layer 6 is not particularly limited, but it is preferably not less than 20% by mass, more preferably not less than 30% by mass, preferably not more than 70% by mass, and more preferably not more than 60% by mass. When the content of the silicone resin is equal to or greater than the above lower limit, the thermal resistance and impact resistance of the top plate 21 can be further increased. Furthermore, when the content of the silicone resin is equal to or smaller than the above upper limit, the mechanical strength of the top plate 21 can be further increased.

Examples of the inorganic pigment include: white inorganic pigment powders, such as TiO₂ powder, ZrO₂ powder, and ZrSiO₄ powder; blue or green inorganic pigment powders containing Co; green inorganic pigment powders containing Co; Ti-Sb-Cr-based or Ti-Ni-based yellow inorganic pigment powders, Co-Si-based red inorganic pigment powders; brown inorganic pigment powders containing Fe; and black inorganic pigment powders containing Cu.

Specific examples of the blue inorganic pigment powders containing Co include Co-Al-based and Co-Al-Ti-based inorganic pigment powders. A specific example of the Co-Al-based inorganic pigment powders is CoAl₂O₄ powder. A specific example of the Co-Al-Ti-based inorganic pigment powders is CoAl₂O₄:TiO₂:Li₂O powder.

Specific examples of the green inorganic pigment powders containing Co include Co-Al-Cr-based and Co-Ni-Ti-Zn-based inorganic pigment powders. A specific example of the Co-Al-Cr-based inorganic pigment powders is Co(Al, Cr)₂O₄ powder. A specific example of the Co-Ni-Ti-Zn-based inorganic pigment powders is (Co, Ni, Zn)₂TiO₄ powder.

Specific examples of the brown inorganic pigment powders containing Fe include Fe-Zn-based inorganic pigment powders. A specific example of the Fe-Zn-based inorganic pigment powders is (Zn, Fe)Fe₂O₄ powder.

Specific examples of the black inorganic pigment powders containing Cu include Cu-Cr-based inorganic pigment powders. A specific example of the Cu-Cr-based inorganic pigment powders is Cu(Cr, Mn)₂O₄ powder.

The above inorganic pigments may be used singly or in a combination of a plurality of them.

The content of the inorganic pigment in the heat-resistant resin layer 6 is not particularly limited, but it is preferably not less than 0.1% by mass, more preferably not less than 10% by mass, preferably not more than 50% by mass, and more preferably not more than 40% by mass. When the content of the inorganic pigment is in the above range, the internal structure of the cooker can be more effectively hidden.

The thickness of the heat-resistant resin layer 6 is not particularly limited. The thickness of the heat-resistant resin layer 6 is preferably not less than 5 µm, more preferably not less than 10 µm, preferably not more than 30 µm, and more preferably not more than 25 µm. When the thickness of the heat-resistant resin layer 6 is in the above range, the thermal resistance of the top plate 21 can be further increased and the internal structure of the cooker can be more effectively hidden.

The method for forming the heat-resistant resin layer 6 is also not particularly limited. First, a paste containing a silicone resin, an inorganic pigment powder, and, if necessary, a solvent is prepared. Next, the prepared paste is applied directly onto the inorganic layer 3 and dried. Thus, a heat-resistant resin layer 6 can be formed. Depending on the composition of the heat-resistant resin layer 6, a top plate 21 may be obtained by firing the heat-resistant resin layer 6 after the drying.

The application speed and the viscosity of the paste can be appropriately selected according to the content of the inorganic pigment in the heat-resistant resin layer 6. For example, when the content of the inorganic pigment in the heat-resistant resin layer 6 is much, it is preferred to decrease the viscosity of the silicone resin and decrease the application speed of the silicone resin.

The drying temperature of the applied paste may be, for example, not lower than 200°C and not higher than 450°C. The drying time may be, for example, not less than ten minutes and not more than an hour.

Also in this embodiment, the tensile stress of the inorganic layer 3 provided on the underside surface 2b of the glass substrate 2 is 3.7 MPa or less. Thus, the mechanical strength of the top plate 21 can be increased, which makes the top plate 21 difficult to break.

Although in this embodiment the heat-resistant resin layer 6 is formed over the entire underside surface 2b of the glass substrate 2, the heat-resistant resin layer 6 may be formed on a portion of the underside surface 2b of the glass substrate 2. For example, the heat-resistant resin layer 6 may be provided under an adhesion site of the temperature sensor attached to a heating portion of the underside surface 2b of the top plate 21.

Although in the above embodiments no coating is formed on the cooking surface 2a of the glass substrate 2, a decorative coating or the like may be formed on the cooking surface 2a for the purposes of improvement in aesthetic appearance, indication of heater positions, and so on.

Alternatively, on the underside surface 2b side of the glass substrate 2, an adhesive layer or the like may be formed between the heat-resistant resin layer 6 and the inorganic layer 3 or a protective layer or the like for the heat-resistant resin layer 6 may be formed over the heat-resistant resin layer 6. Still alternatively, another heat-resistant resin layer may be further formed on the heat-resistant resin layer 6.

Hereinafter, a description will be given in further detail of the present invention with reference to examples. However, the following examples are merely illustrative. The present invention is not at all limited by the following examples.

### (Examples 1 to 16 and Comparative Examples 1 and 2)

First, a glass powder, a Cu-Cr-based black inorganic pigment powder, and a resin binder were mixed to give a ratio of 1:1:2 in terms of mass ratio (glass powder to inorganic pigment powder to resin binder), thus making a paste.

As the glass powder, each of glasses A to F having respective compositions shown in Table 1 below was used. The average coefficient of thermal expansion of each glass powder in a range of 30°C to 380°C both inclusive and the temperature at a glass viscosity of 10^{5.1} mPa·s were as shown in Table 1 below. The glass powder was added so that the content thereof in an inorganic layer to be formed reached the glass content (% by volume) shown in Table 2 below.

Next, the paste was screen-printed on the whole of a clear crystallized glass plate (manufactured by Nippon Electric Glass Co., Ltd., trade name: "N-0", average coefficient of linear thermal expansion at 30°C to 750°C: 0.5 × 10⁻⁷/°C, thickness: 4 mm) serving as the glass substrate. Thereafter, the paste was dried by heating at 830°C for 10 minutes. Thus, an inorganic layer was formed on the glass substrate, thus obtaining a top plate. The thickness of the inorganic layer after the heating was as shown in Table 2 below.

### [Evaluations]

### (Evaluation of Tensile Stress)

The tensile stress of the inorganic layer was evaluated by determining the stress acting on the interface between the glass substrate and the inorganic layer. Specifically, each of the top plates obtained in Examples 1 to 16 and Comparative Examples 1 and 2 was cut and the cut surface was examined in the cross-sectional direction. The tensile stress was determined by measuring the compressive stress acting on the glass substrate side of the interface with a strain gauge (a "strain viewer" manufactured by Orihara Industrial Co., Ltd.) in accordance with the Senarmont method and calculating the tensile stress of the inorganic layer from the compressive stress acting on the glass substrate side.

### (Evaluation of Mechanical Strength)

First, each of the top plates obtained in Examples 1 to 16 and Comparative Examples 1 and 2 was placed in a horizontal plane on top of a wood frame so that its cooking surface with no inorganic layer thereon was face up. Thereafter, a steel ball (weighing 535 g) was let fall freely on the cooking surface of the top plate from a height of 10 cm above the cooking surface of the top plate in a vertical direction. Whether or not the top plate had been broken by the falling of the steel ball was visually examined. When no breakage occurred in the top plate, free-falling of the steel ball was repeated while the height of the steel ball was increased by 5 cm increments until breakage occurred in the top plate, and the lowest height of the steel ball upon breakage in the top plate was measured. The mechanical strength was evaluated by the average height of the steel ball upon breakage in the top plate after the above measurement was repeated ten times.

### (Evaluation of Stains)

Ethanol was applied onto the inorganic layer of each of the top plates obtained in Examples 1 to 16 and Comparative Examples 1 and 2 and ethanol stains of the top plate as viewed from the cooking surface side of the glass substrate were visually evaluated based on the following evaluation criteria.

### <Evaluation Criteria>

Excellent ... no observation of applied ethanol
Good ... see-through observation of applied ethanol
Poor ... penetration of applied ethanol to inorganic layer and observation thereof as stains

The results are shown in Table 2.

**[Table 1]**

| Glass Type | | A | B | C | D | E | F |
|---|---|---|---|---|---|---|---|
| Composition | SiO₂(% by mass) | 63.0 | 62.7 | 62.5 | 62.8 | 63.2 | 63.4 |
| | Al₂O₃(% by mass) | 6.0 | 5.9 | 5.8 | 5.9 | 6.0 | 6.0 |
| | B₂O₃(% by mass) | 20.4 | 22.0 | 23.9 | 24.7 | 18.8 | 20.0 |
| | BaO(% by mass) | 3.0 | 3.0 | 2.9 | 3.0 | 2.9 | 3.0 |
| | Na₂O(% by mass) | 4.6 | 3.4 | 1.8 | 0.8 | 5.8 | 4.6 |
| | K₂O(% by mass) | 1.9 | 1.9 | 1.9 | 1.8 | 2.0 | 1.9 |
| | Li₂O(% by mass) | 0.8 | 0.8 | 0.8 | 0.8 | 0.8 | 0.8 |
| | F(% by mass ) | 0.3 | 0.3 | 0.3 | 0.2 | 0.6 | 0.3 |
| | total( % by mass) | 100.0 | 100.0 | 100.0 | 100.0 | 100.0 | 100.0 |
| Average Coefficient of Thermal Expansion (1/°C) | | 53×10⁻⁷ | 48×10⁻⁷ | 44×10⁻⁷ | 41×10⁻⁷ | 57×10⁻⁷ | 52×10⁻⁷ |
| Temperature at Viscosity of 10^{5.1} mPa • s (°C) | | 875 | 890 | 911 | 944 | 865 | 875 |

**[Table 2]**

| | | Ex. 1 | Ex. 2 | Ex. 3 | Ex.4 | Ex. 5 | Ex.6 | Ex. 7 | Ex. 8 | Ex. 9 | Ex. 10 | Ex. 11 | Ex. 12 | Ex. 13 | Ex. 14 | Ex. 15 | Ex. 16 | Comp. Ex. 1 | Comp. Ex. 2 |
|---|---|---|---|---|---|---|---|---|---|---|---|---|---|---|---|---|---|---|---|
| Glass Type | | A | A | A | A | A | A | A | B | B | C | C | D | E | E | E | E | F | E |
| | Glass Content (% by vol) | 65.2 | 65.2 | 65.2 | 65.2 | 65.2 | 65.2 | 65.2 | 70 | 70 | 71 | 78 | 74.7 | 69.3 | 69.3 | 69.3 | 64.9 | 58.1 | 100 |
| | Thickness of Inorganic Layer After Heating(mm) | 2.5 | 3.7 | 1.3 | 2.2 | 2.2 | 2.2 | 2.2 | 2.2 | 2.2 | 2.4 | 1.7 | 2.0 | 3.5 | 1.7 | 1.3 | 2.5 | 2.5 | 2.0 |
| Tensile Stress (Mpa) | | 3.3 | 3.6 | 3.1 | 2.3 | 2.9 | 2.5 | 2.9 | 2.9 | 2.5 | 3.2 | 3.1 | 2.9 | 3.4 | 3.2 | 2.5 | 3.4 | 2.5 | 3.8 |
| Average Height upon Breakage in Steel Ball Falling Test (cm) | | 61 | 22 | 74 | 64 | 69 | 73 | 72 | 81 | 83 | 67 | 51 | 66 | 31 | 53 | 67 | 51 | 75 | 10 |
| Ethanol Stains | | Excellent | Excellent | Good | Excellent | Excellent | Excellent | Excellent | Excellent | Excellent | Excellent | Excellent | Excellent | Excellent | Excellent | Good | Excellent | Poor | Good |

It was confirmed from Table 2 that the top plates in Examples 1 to 16 had excellent mechanical strength and were less likely to break and stain. In contrast, in the top plate of Comparative Example 1, ethanol stains were observed. The top plate of Comparative Example 2 broke on slight impact.

### [Reference Signs List]

1, 21 ... cooker top plate
2 ... glass substrate
2a ... cooking surface
2b ... underside surface
3 ... inorganic layer
4 ... temperature sensor
5 ... adhesive
6 ... heat-resistant resin layer

## Claims

1. A cooker top plate comprising:
a glass substrate having a cooking surface on which a cooking utensil is to be put and an underside surface opposite to the cooking surface; and
an inorganic layer provided on the underside surface of the glass substrate and containing a glass,
wherein the inorganic layer has a tensile stress of 3.7 MPa or less, and
a content of the glass in the inorganic layer is not less than 60% by volume and not more than 80% by volume.

2. The cooker top plate according to claim 1, wherein the inorganic layer has a tensile stress of not less than 2.2 MPa.

3. The cooker top plate according to claim 1 or 2, wherein the inorganic layer further contains an inorganic pigment.

4. The cooker top plate according to claim 3, wherein a content of the inorganic pigment in the inorganic layer is not less than 20% by volume and not more than 40% by volume.

5. The cooker top plate according to any one of claims 1 to 4, wherein an average coefficient of thermal expansion of the glass in a range of 30°C to 380°C both inclusive is not less than 45 × 10⁻⁷/°C and not more than 55 × 10⁻⁷/°C.

6. The cooker top plate according to any one of claims 1 to 5, wherein a temperature at which the glass has a viscosity of 10^{5.1} mPa·s is not lower than 800°C and not higher than 900°C.

7. The cooker top plate according to any one of claims 1 to 6, wherein the glass is borosilicate glass.

8. The cooker top plate according to any one of claims 1 to 7, wherein the glass has a composition of, in terms of % by mass, 55 to 70% Sio₂, 15 to 25% B₂O₃, 3 to 10% Al₂O₃, 0.1 to 4.9% BaO, 0 to 3% CaO, 0 to 3% MgO, 0.1 to 5% Li₂O, 0 to 10% Na₂O, 0.3 to 15% K₂O, and 0 to 2% F.

9. The cooker top plate according to any one of claims 1 to 8, wherein the inorganic layer has a thickness of not less than 2.0 µm and not more than 2.8 µm.
